# EUROPEAN PATENT APPLICATION

(11) **EP 4 789 797 A1**
(43) Date of publication of application: **12.08.2026**
(21) Application number: 25222158.5
(22) Date of filing: 10.12.2025
(51) Int. Cl.: B22F 12/45, B22F 5/00, B22F 10/28, B22F 10/36, B33Y 10/00, B33Y 50/02, B33Y 80/00

(54) **REDUCING SURFACE DEFECTS FOR MULTI-LASER PBF-L**

(30) Priority: 11.12.2024 US 202418976945
(71) Applicant: RTX Corporation, Farmington, CT 06032 (US)
(72) Inventor: WEBER, Michael, Niantic, 06357 (US)
(74) Representative: Dehns

(57) **Abstract**

A multi-layer component made with a multi-laser PBF-L AM technique includes a defect region that envelopes overlapping points (18'-1, 18'-2, 18'-3) for sequential layers (16'-1, 16'-2, 16'-3) in different locations in sequential overlap regions(16'c), wherein the defect region does not create a structural debit in the component when the component is operated in its intended service.

## Description

### BACKGROUND

The present disclosure relates generally to powder bed fusion additive manufacturing and, more particularly, to multi-laser powder bed fusion additive manufacturing.

Many industrial components, including aircraft engine and fuselage components, are currently being built with various additive manufacturing (AM) techniques. While AM techniques can reliably build production quality parts for geometrically small components, reliably building larger components at desired quality levels can be a challenge.

### SUMMARY

One aspect of the invention includes a method of making a component using multi-laser powder bed fusion (PBF-L) additive manufacturing (AM) techniques, including the steps of: distributing, with a build powder distributor and a recoater, an active layer of build powder onto a build powder bed on a build platform; directing a laser beam from a first laser source onto a first scan area of the build powder bed to melt the active layer of build powder within the first scan area; directing a laser beam from a second laser source onto a second scan area of the build powder bed to melt the active layer of build powder within the second scan area; providing a dwell time to permit the active layer of build powder to resolidify; lowering the build powder platform to permit distribution of another active layer of build powder over a resolidified active layer of build powder; distributing, with a build powder distributor and a recoater, another active layer of build powder onto the build powder bed on the build platform; and repeating the steps recited above a preselected number of times to deposit, melt, and solidify sufficient layers of build powder to form the component. The first scan area is adjacent to the second scan area and the first scan area and second scan area overlap each other at an overlap point in an overlap zone. The overlap point for each succeeding active layer of build powder is different than the overlap point for the preceding active layer.

Another aspect of the invention includes a multi-layer component made with a multi-laser PBF-L AM technique. The component includes a defect region that envelopes the overlapping points for sequential layers in different locations in sequential overlap regions, wherein the defect region does not create a structural debit in the component when the component is operated in its intended service.

### BRIEF DESCRIPTION OF THE DRAWINGS

Fig. 1 is a schematic view of a multi-laser powder bed fusion (PBF-L) additive manufacturing (AM) system.
Fig. 2A is a schematic view of a first method of managing laser overlap in a multi-laser PBF-L AM system.
Fig. 2B is a schematic view of a second method of managing laser overlap in a multi-laser PBF-L AM system.
Fig. 3 is a flow chart of a method of making a component with a multi-laser PBF-L AM system.
Fig. 4A is a flow chart of a method for determining start points for sequential laser passes in a multi-laser PBF-L AM system.
Fig. 4B is a schematic view of a part to be made with the method of Fig. 3A.

### DETAILED DESCRIPTION

As laser powder bed fusion (PBF-L) additive manufacturing (AM) techniques are being adopted as a production process for building increasingly large components, systems that use multiple lasers for a single part can be used to increase process efficiency. Using multiple lasers for a single part generally requires one or more overlapping interfaces in the build where the print area is handed off between lasers. Each scan of the lasers melts a current active layer of build powder and a non-insignificant portion of the layers below the current active layer of build powder. Small calibration differences between the multiple lasers can result in a surface defect along the plane where the print area is handed off between lasers. The surface defect can lead to structural debits at this location and early part retirement or even structural failure after the component is placed into service.

To provide complete coverage of a build powder bed, multi-laser PBF-L machines are generally designed to provide some overlap between the scan area of adjacent lasers. The disclosed process alters the "handoff" location (i.e., the "overlap point") between sequential build layers to reduce or even eliminate the seam seen in components from multi-laser PBF-L machines using conventional procedures. For each new build layer, a single laser will pass over the location of the boundary between adjacent lasers on the build layer below it. Spreading this distribution over multiple layers further reduces the impact of the defect on the part.

Conventional multiple laser scanning strategies use a consistent scan area for each laser such that the overlap between adjacent lasers occurs in the same position (i.e., the "overlap point") for each build layer. This results in a buildup of boundary layer defects. By moving individual layer-by-layer defects from multiple lasers to a location away from one another on a per layer basis, future laser passes will leave the defects either reduced in magnitude or eliminated altogether by re-melt from successive layers. This will lead to less extreme debits on fatigue life, i.e., low cycle fatigue (LCF), high cycle fatigue (HCF), etc., and promote damage tolerant designs (DT). This improved scan pattern will be especially useful for AM of increasingly larger components such as torque boxes, gearboxes, and other components with large, complex geometries.

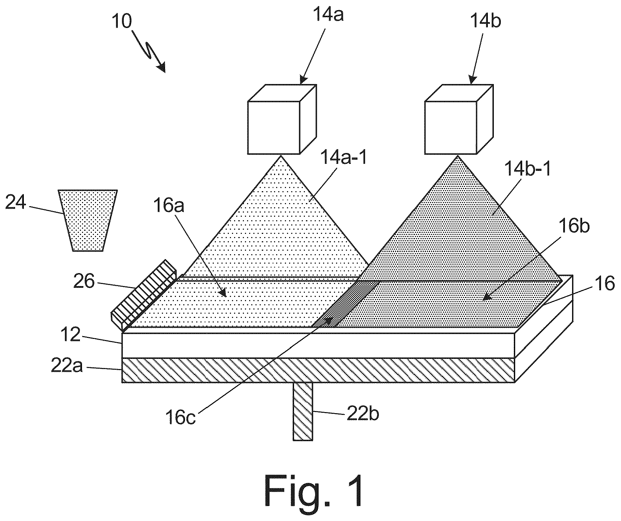

Fig. 1 is a schematic view of a multi-laser PBF-L AM system **10** that includes a build powder bed **12** positioned on a build platform **22a.** The build platform **22a** is connected to a build piston **22b,** which is configured to raise and lower the build platform **22a** to position the build platform **22a** at a height appropriate to receive additional layers of build powder. A build powder distributor **24** and recoater **26** are configured to deposit and spread additional layers of fresh build powder onto the build powder bed **12** to create an active build powder layer **16.** The build powder can be of any composition and particle size deemed appropriate to build a desired component on the multi-laser PBF-L AM system **10.** For example, the build powder can be a metal, metal alloy, polymer, or any other material suitable for building the desired component.

At least two laser sources **14a, 14b** are configured to scan a laser beam across the active build powder layer **16.** As shown in Fig. 1, a first laser source **14a** is configured to scan a laser beam across a first scan area **16a** of the active build powder layer **16.** Similarly, a second laser source **14b** is configured to scan a laser beam across a second scan area **16b** of the active powder layer **16.** The first scan area **16a** and second scan area **16b** overlap in an overlap zone **16c** to ensure complete scan coverage of the active powder layer **16.** The laser power, laser power distribution, and scan dynamics (scan speed, scan pattern, etc.) can be any laser power, laser power distribution, and scan dynamics deemed appropriate for a particular application.

For example, depending on the geometry and desired mechanical properties of the desired component, the laser power can be selected to melt only the active build powder layer **16** or the active build powder layer **16** and a desired number of previous build powder layers to ensure complete melting and resolidification. As discussed above and below, melting and resolidification can, in some examples, resolve defects in the overlap zone of the component being built during a PBF-L AM build campaign.

After an active build powder layer **16** is irradiated by the laser sources **14a, 14b,** a dwell time is provided to permit the active build powder layer **16** to resolidify. The length of the dwell time should be selected to permit the desired amount of resolidification and to provide sufficient time to prepare the PBF-L AM system to process the layer of build powder. The build powder platform is then lowered to permit distribution of another active layer of build powder over a resolidified active layer of build powder. After the build powder layer **16** has resolidified to the desired amount, the build powder distributor **24** and recoater **26** are caused to deposit and spread additional layers of fresh build powder onto the build powder bed **12** to create another active build powder layer **16.** The build process should then be repeated a preselected number of times to deposit, melt, and solidify sufficient layers of build powder to complete the component.

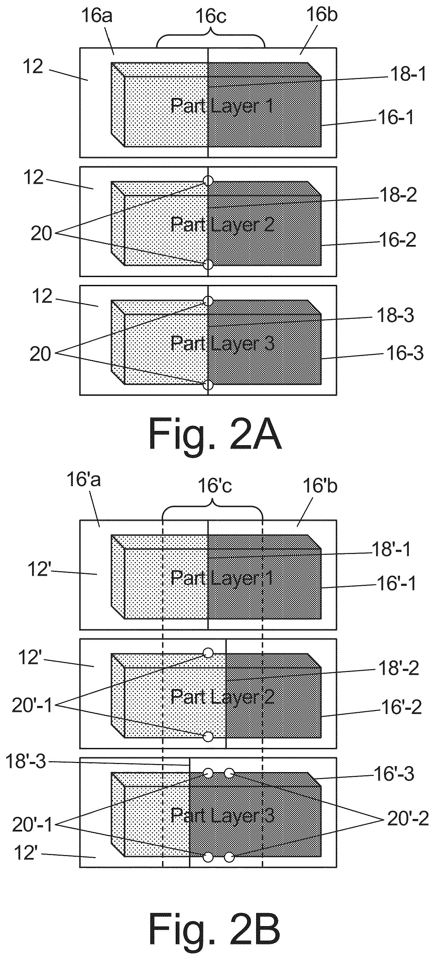

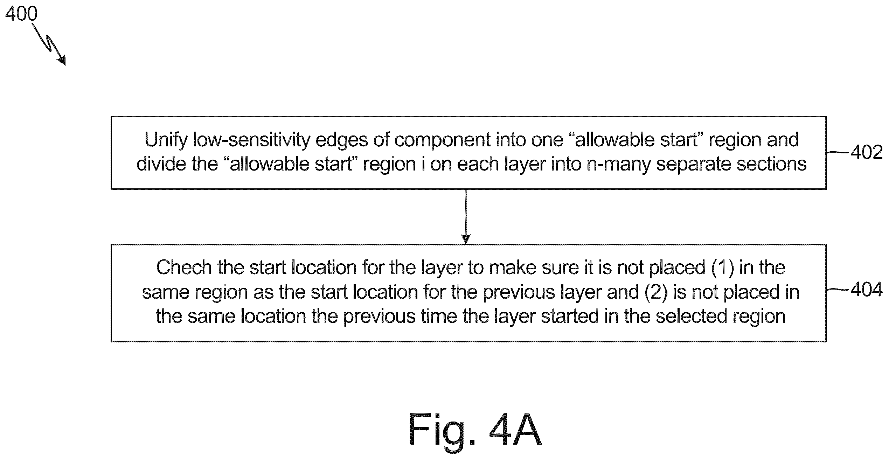

As shown in Fig. 2A, in a conventional multi-layer PBF-L AM process, the overlap points **18-1, 18-2, 18-3** for the adjacent lasers **14a, 14b** (see Fig. 1) in the overlap zone **16c** is the same for sequential layers **16-1, 16-2, 16-3.** Each overlap point **18-1, 18-2, 18-3** creates a defect **20,** which propagates through the sequential layers **16-1, 16-2, 16-3** because the laser overlap results in multiple layer melting in a consistent location in the build powder bed **12.** Depending on the geometry of the part being built, the defect **20** can manifest as point, line, or zone, which can become a location for component failure when the component is placed into service (see Fig. 4A).

Fig. 2B illustrates the disclosed method in which the overlap points **18'-1, 18'-2, 18'-3** for the adjacent lasers **14a, 14b** (see Fig. 1) in the overlap zone **16'c** is different for sequential layers **16'-1, 16'-2, 16'-3.** Each overlap point **18'-1, 18'-2, 18'-3** that may create a defect **20'-1** (from layer **16'-1), 20'-2** (from layer **16'-2)** in the layer in which it is formed does not propagate through the sequential layers **16'-1, 16'-2, 16'-3** because the laser overlap results in multiple layer melting in different locations in the build powder bed **12** for each of the sequential layers **16'-1, 16'-2, 16'-3.** Depending on the geometry of the part being built, the defects **20'-1, 20'-2,** etc. will not manifest as a significant point, line, or zone that can become a location for component failure when the component is placed into service. Rather in some examples, the defects **20'-1, 20'-2,** etc. will be distributed throughout the overlap zone 16'c such that they do not become locations that promote failure. In some other examples, the multiple layer melting that occurs naturally with the PBF-L technique can "heal" the defects **20'-1, 20'-2,** etc. such that the defects **20'-1, 20'-2,** etc. do not create a structural debit in the component. (see Fig. 5B).

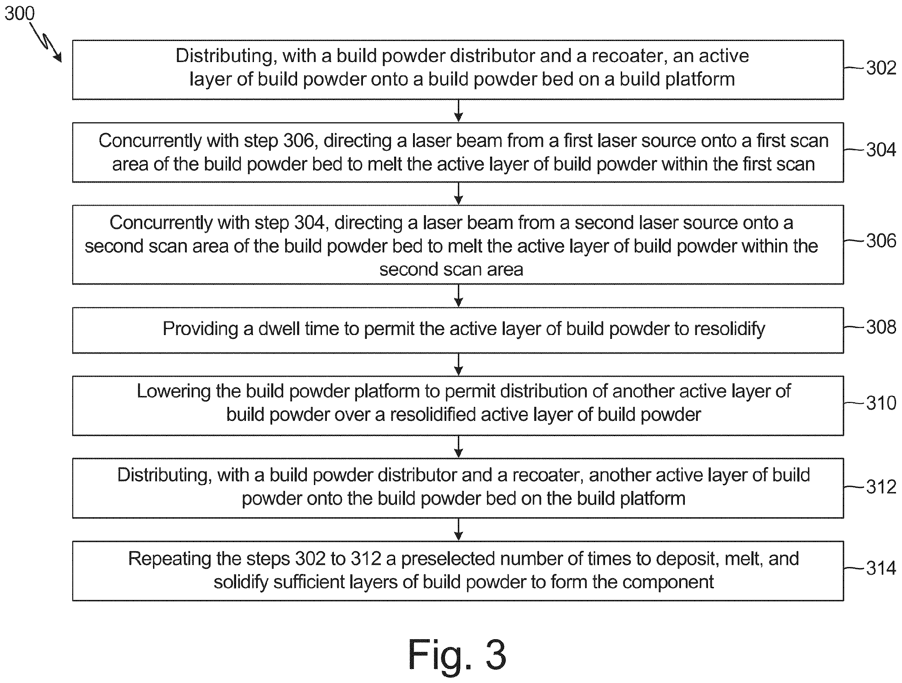

Fig. 3 is a flow chart of the method of making a component using a multi-laser PBF-L AM technique **300.** At step **302,** a build powder distributor **24** and a recoater **26** distributes an active layer of build powder **16** onto a build powder bed **12** on a build platform **22.** At step **304,** a first laser source **14a** directs a laser beam onto a first scan area **16a** of the build powder bed **12** to melt the active layer of build powder **16** within the first scan area **16a** concurrently with the second laser discussed with regard to step **306.** At step **306,** a second laser source **14b** directs a laser beam onto a second scan area **16b** of the build powder bed **12** to melt the active layer of build powder **16** within the second scan area **16b** concurrently with the first laser discussed with regard to step **304.** In a system having more than two laser sources and two scan areas, the additional laser sources would scan their respective additional scan areas concurrently with the first laser source **14a** and second laser source **14b** as discussed. At step **308,** a dwell time is provided to permit the active layer of build powder **16** to resolidify. At step **310,** the build powder platform **22** is lowered to permit distribution of another active layer of build powder over a resolidified active layer of build powder. At step **312,** the build powder distributor **24** and the recoater **26** distribute another active layer of build powder onto the build powder bed **12** on the build platform **22a.** At step **314,** steps **302** to **312** are repeated a preselected number of times to deposit, melt, and solidify sufficient layers of build powder to form the desired component. As shown in Fig. 1, the first scan area **14a** is adjacent to the second scan area **14b** and the first scan area **14a** and second scan area **14b** overlap each other at an overlap point **18** in an overlap zone **16.** As discussed above and shown in Fig. 2B, the overlap point **18** for each succeeding active layer of build powder is different than the overlap point for the preceding active layer.

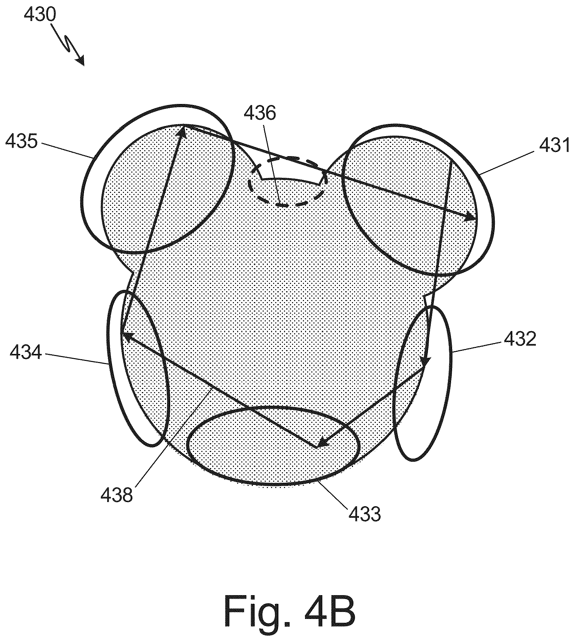

Fig. 4A is a schematic that shows a selection process **400** for identifying regions of low sensitivity to a surface defect on a component **430** (see Fig. 4B) to be made with the disclosed process. In the example of Fig. 4, the part **430** includes at least six regions, **431, 432, 433, 434, 435, 436** that are considered as part of the process **400.** The number of regions for a particular part **430** must correspond at least to the number of layers ***n*** partially or fully remelted by the laser scan for a particular layer. For purposes of the exemplary process **400,** the surfaces of regions **431, 432, 433, 434, 435** are viewed as "low curvature", "low sensitivity" surfaces that are candidates for the laser overlap point. For purposes of this application, "low sensitivity" means any identified region where the presence of a scan start defect is acceptable without additional operations due to the presence of the defect (e.g. finishing/machining processes to remove the defect or rejection of the part due to no longer meeting specification requirements as a result of the defect) or to place the scan start defect away from locations of high stress on the part. The surface of region **436** is viewed as "high sensitivity" surface that is not a candidate for the laser overlap point. Other examples, could include more "low sensitivity regions that the six identified for process **400** and more "high sensitivity" regions then the one identified for process **400.**

The process **400** is repeated for each layer as follows:
At step **402** the "allowable start" point for each layer used to build part **430** is selected to be in one of the "low sensitivity" regions **431, 432, 433, 434, 435** following line **438** (see Fig. 4B). The "allowable start" point for a particular layer could, for example, be the arrowheads along line **438** that falls in the region **431, 432, 433, 434, 435** (or any other point on line **438** that falls in the region **431, 432, 433, 434, 435).** The "allowable start" point for the following layer will start in the region **431, 432, 433, 434, 435** that sequentially "follows" the region **431, 432, 433, 434, 435** that included the start point for the previous layer. The objective is to ensure that the "allowable start" point for a particular layer is positioned away from the "allowable start" point for at least the following ***n*** layers.
At step **404** the start location for the layer is checked (1) to make sure it is not placed in the same region **431, 432, 433, 434, 435** as the previous layer and (2) to make sure it is not placed in the same location as the start location for the previous time the layer started in the selected region **431, 432, 433, 434, 435.** The location within the regions **431, 432, 433, 434, 435** for the start position can be chosen by any decision process that reduces the possibility of starting over or near a previous start location. The order of regions **431, 432, 433, 434, 435** used to start the outer contour could be chosen in a number of ways, and may require different solutions for different parts of the build. If multiple outer contours are present, each outer contour pass should start clocked by one region **431, 432, 433, 434, 435** so adjacent outer contours do not start at the same location.

As discussed above, a component made with a conventional method includes a defect region that results from positioning the overlapping points for sequential layers in the same location in the overlap regions (see Fig. 2A and the accompanying description). This defect region can become a location for component failure when the component is placed into the service for which the component is intended. By contrast, a component made with the disclosed method includes a defect region that results from positioning the overlapping points for sequential layers in different locations in the overlap regions (see Fig. 2A and the accompanying description). This defect region does not create a structural debit in the component when the component is placed into service for which it is intended due to the absence of layer-to-layer defect propagation.

The disclosed method can be used to make any of a number of industrial components. For example, the part can be an aerospace component such as a gas turbine engine component (e.g., cases, combustors, fan section components, compressor section components, turbine section components, tubes, heat exchangers, etc.) or an airplane component (e.g., air cycle machine components, ram air turbine components, gear box components, generator and power distribution system components, flight control and actuation components, cabin components, propeller system components, landing gear components, air data system components, tubes, heat exchangers, etc.). A person of ordinary skill will recognize that the techniques of this disclosure can be used to make a wide variety of components for other applications as well, including but not limited to various components and systems for industrial, automotive, marine, and other applications.

### Discussion of Possible Embodiments

The following are non-exclusive descriptions of possible embodiments of the present invention.

A method of making a component using multi-laser powder bed fusion (PBF-L) additive manufacturing (AM) techniques includes the steps of: distributing, with a build powder distributor and a recoater, an active layer of build powder onto a build powder bed on a build platform; directing a laser beam from a first laser source onto a first scan area of the build powder bed to melt the active layer of build powder within the first scan area; directing a laser beam from a second laser source onto a second scan area of the build powder bed to melt the active layer of build powder within the second scan area; providing a dwell time to permit the active layer of build powder to resolidify; lowering the build powder platform to permit distribution of another active layer of build powder over a resolidified active layer of build powder; distributing, with a build powder distributor and a recoater, another active layer of build powder onto the build powder bed on the build platform; and repeating the steps recited above a preselected number of times to deposit, melt, and solidify sufficient layers of build powder to form the component. The first scan area is adjacent to the second scan area and the first scan area and second scan area overlap each other at an overlap point in an overlap zone. The overlap point for each succeeding active layer of build powder is different than the overlap point for the preceding active layer.

The method of the preceding paragraph can optionally include any one or more of the following features, configurations and/or additional elements:
A power of the lasers from the first laser source and the second laser source is selected to melt only the active build powder layer.
A power of the lasers from the first laser source and the second laser source is selected to melt the active build powder layer and a desired number of previous build powder layers.

The component is an aerospace component.

The aerospace component is a gas turbine engine component.

The gas turbine engine component is one of a case, combustor, fan section component, compressor section component, turbine section component, tube, heat exchanger, gear box, and torque box.

The aerospace component is an airplane component.

The airplane component is one of an air cycle machine component, a ram air turbine component, a gear box component, a generator component, a power distribution system components, a flight control system component, an actuation system component, a cabin component, a propeller system component, a landing gear component, an air data system component, tubes, and heat exchangers.

A multi-layer component made with a multi-laser PBF-L AM technique includes a defect region that envelopes the overlapping points for sequential layers in different locations in sequential overlap regions, wherein the defect region does not create a structural debit in the component when the component is operated in its intended service.

The multi-layer component of the preceding paragraph can optionally include any one or more of the following features, configurations and/or additional elements:
The component is an aerospace component.
The aerospace component is a gas turbine engine component.
The gas turbine engine component is one of a case, combustor, fan section component, compressor section component, turbine section component, tube, heat exchanger, gear box, and torque box.
The aerospace component is an airplane component.
The airplane component is one of an air cycle machine component, a ram air turbine component, a gear box component, a generator component, a power distribution system components, a flight control system component, an actuation system component, a cabin component, a propeller system component, a landing gear component, an air data system component, tubes, and heat exchangers.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of making a component using multi-laser powder bed fusion (PBF-L) additive manufacturing (AM) techniques, comprising the steps of:
distributing, with a build powder distributor (24) and a recoater (26), an active layer (16'-1, 16'-2, 16'-3) of build powder (16) onto a build powder bed (12) on a build platform (22a);
directing a laser beam from a first laser source (14a) onto a first scan area (16'a) of the build powder bed (12) to melt the active layer (16'-1, 16'-2, 16'-3) of build powder (16) within the first scan area (16'a);
directing a laser beam from a second laser source (14b) onto a second scan area (16'b) of the build powder bed (12) to melt the active layer (16'-1, 16'-2, 16'-3) of build powder (16) within the second scan area (16'b);
providing a dwell time to permit the active layer (16'-1, 16'-2, 16'-3) of build powder (16) to resolidify;
lowering the build powder platform (22a) to permit distribution of another active layer (16'-1, 16'-2, 16'-3) of build powder (16) over a resolidified active layer (16'-1, 16'-2, 16'-3) of build powder (16);
distributing, with a build powder distributor (24) and a recoater (26), another active layer (16'-1, 16'-2, 16'-3) of build powder (16) onto the build powder bed (12) on the build platform (22a);
repeating the steps recited above a preselected number of times to deposit, melt, and solidify sufficient layers (16'-1, 16'-2, 16'-3) of build powder (16) to form the component;
wherein the first scan area (16'a) is adjacent to the second scan area (16'b) and the first scan area (16'a) and second scan area (16'b) overlap each other at an overlap point (18'-1, 18'-2, 18'-3) in an overlap zone (16'c);
wherein the steps of directing a laser beam from a first laser source (14a) and directing a laser beam from a second laser source (14b) are performed concurrently; and
wherein the overlap point (18'-1, 18'-2, 18'-3) for each succeeding active layer (16'-1, 16'-2, 16'-3) of build powder (16) is different than the overlap point (18'-1, 18'-2, 18'-3) for the preceding active layer (16'-1, 16'-2, 16'-3).

2. The method of claim 1, wherein a power of the lasers from the first laser source (14a) and the second laser source (14b) is selected to melt only the active build powder layer.

3. The method of claim 1, wherein a power of the lasers from the first laser source (14a) and the second laser source (14b) is selected to melt the active build powder layer and a desired number of previous build powder layers.

4. The method of claim 1, 2 or 3, further comprising:
directing a laser beam from a third laser source onto a third scan area of the build powder bed (12) to melt the active layer of build powder (16) within the third scan area;
wherein the steps of directing a laser beam from a first laser source (14a), directing a laser beam from a second laser source (14b), and directing a laser beam from a third laser source are performed concurrently.

5. The method of any preceding claim, wherein the component is an aerospace component.

6. The method of claim 5, wherein the aerospace component is a gas turbine engine component.

7. The method of claim 6, wherein the gas turbine engine component is one of a case, combustor, fan section component, compressor section component, turbine section component, tube, heat exchanger, gear box, and torque box.

8. The method of claim 5, wherein the aerospace component is an airplane component.

9. The method of claim 8, wherein the airplane component is one of an air cycle machine component, a ram air turbine component, a gear box component, a generator component, a power distribution system components, a flight control system component, an actuation system component, a cabin component, a propeller system component, a landing gear component, an air data system component, tubes, and heat exchangers.

10. A multi-layer component made with a multi-laser PBF-L AM technique, comprising a defect region that envelopes overlapping points (18'-1, 18'-2, 18'-3) for sequential layers (16'-1, 16'-2, 16'-3) in different locations in sequential overlap regions (16'c), wherein the defect region does not create a structural debit in the component when the component is operated in its intended service.

11. The multi-layer component of claim 10, wherein the component is an aerospace component.

12. The multi-layer component of claim 11, wherein the aerospace component is a gas turbine engine component.

13. The multi-layer component of claim 12, wherein the gas turbine engine component is one of a case, combustor, fan section component, compressor section component, turbine section component, tube, heat exchanger, gear box, and torque box.

14. The multi-layer component of claim 11, wherein the aerospace component is an airplane component.

15. The multi-layer component of claim 14, wherein the airplane component is one of an air cycle machine component, a ram air turbine component, a gear box component, a generator component, a power distribution system components, a flight control system component, an actuation system component, a cabin component, a propeller system component, a landing gear component, an air data system component, tubes, and heat exchangers.
